# FASCICULE DE BREVET EUROPEEN

(11) **EP 0 780 746 B1**
(45) Date de publication et mention de la délivrance du brevet: **10.05.2000**
(21) Numéro de dépôt: 96402659.5
(22) Date de dépôt: 09.12.1996
(51) Int. Cl.: G05D 1/00, G07C 3/00

(54) **Dispositif de surveillance d'un système complexe, notamment d'un aéronef**
Überwachungssystem für ein komplexes System, insbesondere für ein Flugzeug
Monitoring system for a complex system, especially for an aircraft

(30) Priorité: 22.12.1995 FR 9515351
(43) Date de publication de la demande: 25.06.1997
(73) Titulaire: AEROSPATIALE MATRA, 75016 Paris (FR)
(72) Inventeur: Lauta, Raymond, 31300 Toulouse (FR); Lejarre Tatham, Lydie, 31880 La Salvetat Saint Gilles (FR)
(74) Mandataire: Bonnetat, Christian

(56) Documents cités:
- EP-A- 0 407 179
- EP-A- 0 580 474
- WO-A-95/09103
- WO-A-95/26012
- US-A- 4 635 030
- US-A- 4 845 495
- IEEE PROCEEDINGS OF THE 28TH CONFERENCE ON DECISION AND CONTROL, Décembre 1987, LOS ANGELES, pages 1941-1947, XP002014263 SCHUTTE: "An evaluation of a real-time fault diagnosis expert system for aircraft applications"

## Description

La présente invention concerne un dispositif de surveillance d'un système complexe.

Dans le cadre de la présente invention, on entend par système complexe un système comportant une pluralité d'éléments interconnectés, en particulier des calculateurs, et dont le fonctionnement est contrôlé par un dispositif de surveillance centralisée. De tels systèmes complexes contrôlés par un dispositif de surveillance existent dans des domaines d'activité très variés, comme par exemple dans l'industrie, dans l'automobile ou dans l'aviation.

Bien que la présente invention soit ainsi applicable à de très nombreux systèmes, elle sera plus particulièrement décrite ci-après dans le cadre d'un avion, plus particulièrement un avion de transport.

De façon connue, le dispositif de surveillance d'un système complexe, tel qu'envisagé dans la présente invention, comporte généralement :
- une unité centrale reliée à au moins certains des éléments du système complexe et susceptible de transmettre à un moyen d'affichage, automatiquement ou sur demande d'un opérateur du système complexe, des informations de surveillance, notamment des informations de panne, relatives au système complexe ainsi surveillé ; ainsi que
- ledit moyen d'affichage relié à ladite unité centrale et destiné à visualiser, pour chaque information de surveillance reçue de l'unité centrale, un message relatif à ladite information de surveillance.

Dans le cadre d'un avion de transport, un tel dispositif de surveillance est destiné principalement :
- à informer les pilotes, généralement sur leur demande, de l'état des différents éléments de l'avion ainsi surveillés ; et/ou
- à émettre des messages d'alarme, par exemple lorsque l'un desdits éléments est défectueux ou se trouve dans un état qui est incompatible avec l'état de fonctionnement actuel de l'avion.

On remarquera que les messages émis sont souvent accompagnés de propositions ou de recommandations, destinées à préciser au pilote les opérations à effectuer. Ces messages et ces propositions sont définis et mis au point lors de la conception de l'avion, avant sa mise en fonctionnement.

Or, lors du fonctionnement de l'avion, les messages et les propositions qui sont émis peuvent s'avérer incomplets ou même inexacts.

Il est alors nécessaire de les compléter ou de les modifier, au moyen d'informations complémentaires qui sont associées aux informations de surveillance devant être amendées.

Toutefois, de tels amendements sont très difficiles à mettre en oeuvre en pratique au niveau du dispositif de surveillance.

Aussi, la solution utilisée actuellement, en particulier par les compagnies aériennes, est de transmettre les corrections devant être prises en compte, au pilote ou plus généralement à l'opérateur du système complexe, qui doit les mémoriser. Ainsi, lorsqu'une information de surveillance est émise, le pilote ou l'opérateur du système complexe doit rechercher dans sa mémoire si une information complémentaire est associée ou non à cette information de surveillance et, le cas échéant, il doit se rappeler cette information complémentaire ou consulter la documentation technique relative à cette information.

Cette solution usuelle présente en particulier les inconvénients suivants :
- un risque d'erreur important puisque la solution est basée essentiellement sur la capacité de mémorisation du pilote ;
- un détournement de la concentration du pilote de ses tâches actuelles ; et
- une recherche documentaire difficile entraînant en particulier une perte de temps.

Par conséquent, l'efficacité de cette solution connue repose essentiellement sur la mémoire du pilote, ce qui accroît la charge du pilotage.

La présente invention a pour objet de remédier à ces inconvénients. Elle concerne un dispositif de surveillance d'un système complexe permettant à un opérateur dudit système complexe d'être informé de façon fiable, et directement lors de la communication d'une information de surveillance, de l'existence d'une information complémentaire, en diminuant la charge de travail de cet opérateur.

A cet effet, le dispositif de surveillance d'un système complexe, du type décrit précédemment, est remarquable selon l'invention en ce que ladite unité centrale est chargée d'une base de données pouvant être remise à jour et munie d'informations complémentaires associées à au moins certaines desdites informations de surveillance, en ce que, avant de transmettre une information de surveillance audit moyen d'affichage, l'unité centrale vérifie si ladite base de données comporte une information complémentaire associée à ladite information de surveillance à transmettre et, le cas échéant, l'unité centrale signale au moment de la transmission de ladite information de surveillance l'existence de cette information complémentaire, et en ce que ledit moyen d'affichage est susceptible de visualiser, le cas échéant, un signal caractéristique indiquant l'existence d'une information complémentaire.

Ainsi, grâce à l'invention, l'opérateur du système complexe est averti le cas échéant en temps réel de l'existence d'une information complémentaire et donc de la nécessité de se référer à la documentation technique correspondante. De ce fait, un oubli ou une mauvaise appréciation de la situation réelle du système complexe par l'opérateur devient improbable.

De plus, l'opérateur peut rester concentré sur ses tâches actuelles lors de l'émission d'une information de surveillance et se fier totalement aux informations dudit système de surveillance.

Par conséquent, lorsque l'existence d'une information complémentaire est signalée, l'opérateur doit consulter la documentation technique relative à cette information complémentaire. Toutefois, pour éviter d'avoir à transporter une documentation technique généralement importante, ladite documentation technique étant en général constituée de notes écrites, et/ou pour éviter d'avoir à effectuer une recherche documentaire qui est souvent longue et fastidieuse, on peut avantageusement prévoir selon l'invention que ladite base de données comporte, pour chaque information complémentaire, toutes les données relatives à cette information complémentaire et qu'elle puisse être consultée directement par un opérateur du système complexe, conformément à un mode de réalisation particulièrement avantageux.

En variante, afin de diminuer encore plus la charge de travail dudit opérateur, lesdites données relatives à une information complémentaire et stockées dans ladite base de données peuvent être affichées directement sur ledit moyen d'affichage en complément dudit signal caractéristique.

Les informations de surveillance du système complexe, en particulier d'un avion, peuvent évidemment changer en fonction du mode de fonctionnement et de l'environnement dudit système complexe. Aussi, pour prendre en compte cette possibilité, avantageusement les données de ladite base de données sont adaptées à l'environnement du système complexe.

Par ailleurs, on notera que le signal caractéristique destiné à indiquer, sur le moyen d'affichage, l'existence d'une information complémentaire peut bien entendu présenter différentes formes dans le cadre de la présente invention. Il peut en particulier être réalisé sous forme d'un message littéral ou d'un graphisme particulier.

Comme indiqué précédemment, l'invention se caractérise par la possibilité de remettre à jour, évidemment le plus facilement et le plus rapidement possible, ladite base de données. Selon l'invention, cette remise à jour peut être effectuée, soit manuellement, soit par l'intermédiaire d'une unité de chargement.

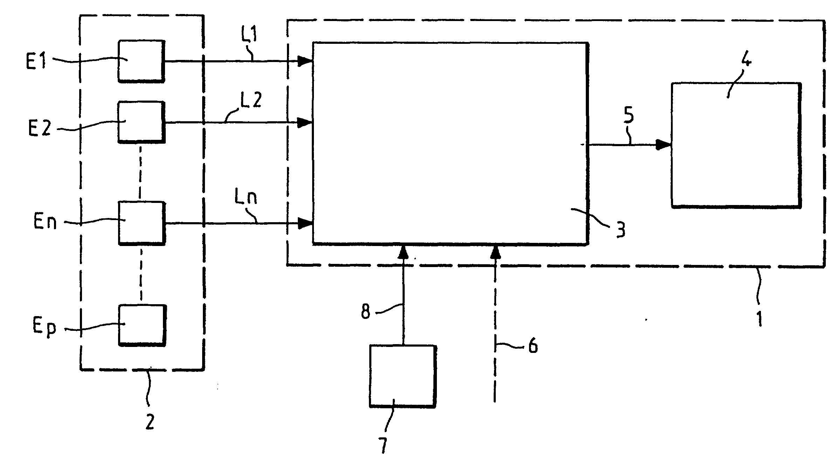

L'unique figure du dessin annexé fera bien comprendre comment la présente invention peut être réalisée. Cette figure montre de façon schématique un dispositif de surveillance conforme à l'invention, associé à un système complexe.

Le dispositif de surveillance 1, conforme à l'invention et représenté schématiquement sur l'unique figure du dessin, est destiné à la surveillance d'un système complexe 2 représenté de façon partielle et schématique.

On entend par système complexe, dans le cadre de la présente invention, un système comportant une pluralité d'éléments E1, E2, ..., Ep, par exemple des calculateurs, qui présentent de très nombreuses interconnexions non représentées sur la figure.

Par conséquent, ledit système complexe peut correspondre en particulier à un chemin de fer, à une centrale nucléaire ou à un aéronef, par exemple un hélicoptère. A titre d'exemple, on précisera l'invention ci-après en référence à un avion de transport.

De façon connue, le dispositif de surveillance 1 d'un tel système complexe 2 comporte :
- une unité centrale 3 reliée à au moins certains desdits éléments E1 à En du système complexe 2, respectivement par l'intermédiaire de liaisons L1 à Ln ; et
- un moyen d'affichage 4, par exemple un écran d'ordinateur, relié par une liaison 5 à ladite unité centrale 3.

Ladite unité centrale 3 surveille les éléments E1 à En auxquels elle est reliée et elle est susceptible de transmettre au moyen d'affichage 4, automatiquement dans certains cas ou sur demande d'un opérateur du système complexe, par exemple le pilote d'un avion de transport, des informations de surveillance.

Lorsqu'il reçoit une telle information de surveillance, ledit moyen d'affichage 4 visualise un message relatif à ladite information de surveillance de manière à permettre la communication de cette information à l'opérateur qui contrôle le système complexe 2.

Les informations de surveillance ainsi communiquées sont des informations, en particulier des informations de panne, destinées à indiquer l'état du système complexe 2 ou de certains éléments E1 à En dudit système complexe 2.

Lorsqu'une information de panne est transmise, le moyen d'affichage 4 visualise un message d'alarme qui est généralement accompagné de propositions ou de recommandations, destinées à préciser à l'opérateur la conduite à adopter dans une telle situation, en particulier pour un pilote les opérations à effectuer.

Les messages et les propositions, ainsi communiqués, ont été définis et mis au point lors de la conception de l'avion. Toutefois, ces messages et ces propositions peuvent s'avérer incomplets ou même inexacts, par la suite, lors du fonctionnement du système complexe 2, tout au moins lorsque le système complexe 2 se trouve lors de son fonctionnement dans certains environnements particuliers.

Aussi, est-il souvent nécessaire de modifier les messages prédéfinis, en particulier pour les adapter aux évolutions du système complexe 2.

Toutefois, de telles modifications sont extrêmement difficiles à mettre en oeuvre sur le dispositif de surveillance.

Aussi, la solution utilisée actuellement, pour prendre en compte les corrections nécessaires dans les informations de surveillance à transmettre, consiste à communiquer à l'opérateur du système complexe 2, par exemple au pilote d'un avion de transport, les informations complémentaires associées à des informations de surveillance existantes, ces informations complémentaires étant destinées à modifier ou compléter les informations de surveillance auxquelles elles sont associées.

Par exemple, lorsque le constructeur d'un avion a connaissance de nouvelles informations, il envoie ces informations sous forme d'un document technique, généralement des notes écrites, à la compagnie aérienne utilisant l'avion, cette dernière transmettant ces informations aux pilotes et au personnel concerné.

Par conséquent, lorsqu'une information de surveillance est émise au cours du vol, le pilote ou le copilote doit réfléchir pour savoir si une information complémentaire, associée à cette information de surveillance, existe ou non. Dans l'affirmative, il doit alors consulter la documentation technique correspondante, à moins bien entendu de connaître le contenu de cette information complémentaire, ce qui, bien que représentant une solution plus rapide, suppose une charge de travail et une capacité de mémorisation importantes et présente un risque d'erreur accru.

Cette solution utilisée actuellement n'est pas suffisamment fiable, puisqu'elle repose essentiellement sur la bonne mémoire du pilote.

De plus, cette solution détourne, au moins en partie, la concentration du pilote de ses tâches actuelles, en particulier du pilotage.

Le dispositif de surveillance 1 conforme à l'invention permet de remédier à ces inconvénients.

A cet effet, ledit dispositif de surveillance 1 présente selon l'invention les caractéristiques suivantes :
- l'unité centrale 3 est chargée d'une base de données munie des informations complémentaires associées auxdites informations de surveillance, ladite base de données pouvant être remise à jour facilement, tel que précisé ci-dessous ;
- l'unité centrale 3 vérifie, avant de transmettre une information de surveillance au moyen d'affichage 4, si ladite base de données comporte une information complémentaire associée à ladite information de surveillance à transmettre et, le cas échéant, l'unité centrale 3 signale au moment de la transmission de ladite information de surveillance l'existence de cette information complémentaire ; et
- le moyen d'affichage 4 est susceptible de visualiser un signal caractéristique, par exemple sous forme d'un message littéral ou d'un graphisme particulier, indiquant l'existence d'une information complémentaire.

Ainsi, lorsqu'un message relatif à une information de surveillance est accompagné dudit signal caractéristique prédéfini, le pilote sait qu'il doit consulter la documentation technique correspondante.

Selon l'invention, dans un premier mode de réalisation, ledit signal caractéristique indique de façon précise les références du document technique comportant l'information complémentaire considérée, tandis que, dans un deuxième mode de réalisation très avantageux, ladite base de données comporte toutes les données relatives aux différentes informations complémentaires existantes et elle est réalisée de manière à pouvoir être consultée directement par les opérateurs du système complexe.

Par ailleurs, dans un troisième mode de réalisation particulièrement avantageux, ladite base de données comporte également toutes les données relatives aux différentes informations complémentaires existantes et le dispositif de surveillance 1 est réalisé de manière à afficher le cas échéant lesdites données sur ledit moyen d'affichage 4 en complément dudit signal caractéristique.

Ainsi, grâce à l'invention, tout oubli devient improbable.

Selon l'invention, l'unité centrale 3 peut être chargée de ladite base de données de deux manières différentes, à savoir :
- d'une part, de manière manuelle, au moyen d'un terminal de calculateur relié par l'intermédiaire d'une liaison 6 à ladite unité centrale 3 ; et
- d'autre part, par l'intermédiaire d'une unité de chargement 7, par exemple une unité à disquette, reliée à l'unité centrale 3 par une liaison 8.

Pour la mise en oeuvre de ce dernier mode de réalisation, le constructeur de l'avion peut transmettre les informations complémentaires dont il a connaissance à la compagnie aérienne exploitante, en les enregistrant sur un support informatique, par exemple une disquette, adapté à l'unité de chargement 7.

On notera que, sur certains types d'avions de transport, le terminal permettant de communiquer avec l'unité centrale 3 est installé sur la console entre le pilote et le copilote de sorte que, dans ce cas, la première solution de chargement peut être la mieux appropriée.

On remarquera de plus que, sur de nombreux avions, l'unité centrale 3 est formée de deux calculateurs d'alarmes non représentés. Dans ce cas, on peut soit charger les deux calculateurs séparément au moyen de dispositifs appropriés, soit charger d'abord l'un desdits calculateurs et recopier ensuite les données ainsi chargées dans l'autre calculateur également au moyen de dispositifs appropriés, ce qui met bien en évidence la multiplicité de mises en oeuvre possibles de la présente invention.

## Revendications

1. Dispositif de surveillance (1) d'un système complexe (2), notamment un aéronef, qui comporte une pluralité d'éléments interconnectés (E1 à Ep), ledit dispositif de surveillance (1) comprenant :
- une unité centrale (3) reliée à au moins certains desdits éléments (E1 à En) du système complexe (2) et susceptible de transmettre à un moyen d'affichage (4), automatiquement ou sur demande d'un opérateur dudit système complexe (2), des informations de surveillance, notamment des informations de panne, relatives au système complexe ainsi surveillé ; ainsi que
- ledit moyen d'affichage (4) relié à ladite unité centrale (3) et destiné à visualiser, pour chaque information de surveillance reçue de l'unité centrale (3), un message relatif à ladite information de surveillance,
caractérisé en ce que ladite unité centrale (3) est chargée d'une base de données pouvant être remise à jour et munie d'informations complémentaires associées à au moins certaines desdites informations de surveillance, en ce que, avant de transmettre une information de surveillance audit moyen d'affichage (4), l'unité centrale (3) vérifie si ladite base de données comporte une information complémentaire associée à ladite information de surveillance à transmettre et, le cas échéant, l'unité centrale (3) signale au moment de la transmission de ladite information de surveillance l'existence de cette information complémentaire, et en ce que ledit moyen d'affichage (4) est susceptible de visualiser, le cas échéant, un signal caractéristique indiquant l'existence d'une information complémentaire.

2. Dispositif selon la revendication 1,
caractérisé en ce que ladite base de données comporte, pour chaque information complémentaire, toutes les données relatives à cette information complémentaire, et en ce que ladite base de données peut être consultée directement par un opérateur du système complexe.

3. Dispositif selon la revendication 1,
caractérisé en ce que ladite base de données comporte, pour chaque information complémentaire, toutes les données relatives à cette information complémentaire, et en ce que lesdites données sont affichées sur ledit moyen d'affichage (4) en complément dudit signal caractéristique.

4. Dispositif selon l'une quelconque des revendications 1 à 3,
caractérisé en ce que ladite base de données est remise à jour manuellement.

5. Dispositif selon l'une quelconque des revendications 1 à 3,
caractérisé en ce que ladite base de données est remise à jour au moyen d'une unité de chargement (7).

## Patentansprüche

1. Überwachungssystem (1) für ein komplexes System (2), insbesondere für ein Flugzeug, das eine Vielzahl von miteinander verbundenen Elementen (E1 bis Ep) umfaßt, wobei das genannte Überwachungssystem (1) folgendes umfaßt:
- eine Zentraleinheit (3), die mit mindestens bestimmten der genannten Elemente (E1 bis En) des komplexen Systems (2) verbunden ist und automatisch oder auf Anforderung eines Bedieners des genannten komplexen Systems (2) Überwachungsinformationen, insbesondere Panneninformationen bezüglich des so überwachten komplexen Systems zu einer Anzeigevorrichtung (4) übertragen kann; sowie
- die genannte, mit der genannten Zentraleinheit (3) verbundene Anzeigevorrichtung (4), die für jede von der Zentraleinheit (3) erhaltene Überwachungsinformation eine Meldung zur genannten Überwachungsinformation anzeigen soll,
dadurch gekennzeichnet, daß die genannte Zentraleinheit (3) mit einer Datenbank bestückt ist, die aktualisiert und mit Zusatzinformationen versehen werden kann, die zumindest bestimmten der genannten Überwachungsinformationen zugeordnet sind, daß die Zentraleinheit (3) vor der Übertragung einer Überwachungsinformation zur genannten Anzeigevorrichtung (4) überprüft, ob die genannten Datenbank eine-der genannten zu übertragenden Überwachungsinformation zugeordnete Zusatzinformation enthält, und die Zentraleinheit (3) gegebenenfalls zum Zeitpunkt der Übertragung der genannten Überwachungsinformation das Vorhandensein dieser Zusatzinformation meldet, sowie dadurch daß die genannte Anzeigevorrichtung (4) gegebenenfalls ein charakteristisches Signal anzeigen kann, das das Vorhandensein einer Zusatzinformation angibt.

2. System gemäß Anspruch 1,
dadurch gekennzeichnet, daß die genannte Datenbank für jede Zusatzinformation alle Daten zu dieser Zusatzinformation enthält, und dadurch daß ein Bediener des komplexen Systems direkt in der genannten Datenbank nachsuchen kann.

3. System gemäß Anspruch 1,
dadurch gekennzeichnet, daß die genannte Datenbank für jede Zusatzinformation alle Daten zu dieser Zusatzinformation enthält, und dadurch daß die genannten Daten zusätzlich zum genannten charakteristischen Signal auf der genannten Anzeigevorrichtung (4) angezeigt werden.

4. System gemäß einem beliebigen der Ansprüche 1 bis 3,
dadurch gekennzeichnet, daß die genannte Datenbank manuell aktualisiert wird.

5. System gemäß einem beliebigen der Ansprüche 1 bis 3,
dadurch gekennzeichnet, daß die genannte Datenbank mittels einer Ladeeinheit (7) aktualisiert wird.

## Claims

1. A device (1) for monitoring a complex system (2), such as an aircraft, that includes a plurality of interconnected units (E1 to Ep), said monitoring device (1) comprising:
- a central unit (3) connected to at least some of the units (E1 to En) of the complex system (2) and adapted to transmit to display means (4) monitoring information, in particular fault information, relating to the complex system monitored in this way, either automatically or at the request of an operator of the complex system (2) ;
- said display means (4) connected to said central unit (3) and adapted to display, each time monitoring information is received from the central unit (3), a message relating to said monitoring information,
characterized in that said central unit (3) is loaded with a database that can be updated and is provided with additional information associated with at least some of said monitoring information, and in that before transmitting monitoring information to said display means (4), said central unit (3) verifies if said database includes additional information associated with said monitoring information to be transmitted and, if necessary, said central unit (3) indicates at the time of transmitting said monitoring information the existence of said additional information, and in that said display means (4) are adapted to display a characteristic signal indicating the existence of additional information, if necessary.

2. The device claimed in claim 1, characterized in that said database includes all the data concerning said additional information and is adapted to be consulted directly by an operator of said complex system.

3. The device claimed in claim 1, characterized in that said database includes all the data concerning said additional information and said data is displayed on said display means (4) in addition to said characteristic signal.

4. The device claimed in any of claims 1 to 3, characterized in that said database is updated manually.

5. The device claimed in any of claims 1 to 3, characterized in that said database is updated by means of a loading unit (7).
